(19)

**Europäisches Patentamt**

**European Patent Office**

**Office européen des brevets**

(11) **EP 2 583 998 B1**

(12) **EUROPEAN PATENT SPECIFICATION**

(45) Date of publication and mention
of the grant of the patent:
**28.02.2018 Bulletin 2018/09**

(51) Int Cl.:
***C08L 23/08*** *(2006.01)*

(21) Application number: **11008475.3**

(22) Date of filing: **21.10.2011**

(54) **Polyethylene composition with high rapid crack propagation resistance and pressure resistance**

Polyethylenzusammensetzung mit sehr schneller Rissausbreitungsbeständigkeit und
Druckbeständigkeit

Composition de polyéthylène avec résistance de propagation de fissures très rapides et résistance à
la pression

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**24.04.2013 Bulletin 2013/17**

(73) Proprietor: **Borealis AG**
**1220 Wien (AT)**

(72) Inventors:
• **Piel, Tanja**
**4030 Linz (AT)**

• **Buryak, Andrey**
**4020 Linz (AT)**

(74) Representative: **Kador & Partner**
**Corneliusstraße 15**
**80469 München (DE)**

(56) References cited:
**EP-A1- 1 460 105       EP-A1- 1 985 660
WO-A1-00/22040       US-A1- 2003 096 901
US-A1- 2007 282 067   US-A1- 2010 178 443
US-B1- 6 185 349       US-B1- 6 878 784**

Note: Within nine months of the publication of the mention of the grant of the European patent in the European Patent
Bulletin, any person may give notice to the European Patent Office of opposition to that patent, in accordance with the
Implementing Regulations. Notice of opposition shall not be deemed to have been filed until the opposition fee has been
paid. (Art. 99(1) European Patent Convention).

**Description**

The present invention relates to a polyolefin composition with improved pressure resistance as well as impact properties, especially rapid crack propagation resistance, comprising a base resin which comprises a first ethylene homo- or copolymer fraction, and a second ethylene homo- or copolymer fraction, to a process for producing such a polyethylene composition and to the use of the above polyethylene composition for the production of an article, preferably a pipe or a fitting.

Nowadays, pipes of polymer material are frequently used for various purposes, such as fluid transport, i.e. transport of liquid or gas, e.g. water or natural gas, during which the fluid can be pressurized. Moreover, the transported fluid may have varying temperatures, usually within the temperature range from about 0 °C. to about 50 °C. Such pressure pipes are preferably made of polyolefin plastic, such as medium density polyethylene (MDPE; density: 930-942 $kg/m^3$) and high density polyethylene (HDPE; density: 945-965 $kg/m^3$). By the expression "pressure pipe" herein is meant a pipe which, when used, is subjected to a positive pressure, i.e. the pressure inside the pipe is higher than the pressure outside the pipe.

Polymer pipes are generally manufactured by extrusion, or by injection moulding. The properties of such conventional polymer pipes produced by extrusion or injection moulding are sufficient for many purposes, although enhanced properties may be desired, for instance in applications requiring high pressure resistance, i.e. pipes that are subjected to an internal fluid pressure for a long and/or short period of time. A common standard for expressing pressure resistance of PE 100 pipes according to the design stress rating is measured according to ISO 9080:2003. The suitability for use of a plastics pressure pipe is first of all determined by the performance under stress of its material of construction, taking into account the envisaged service conditions (e.g. temperature). It is conventional to express this by means of the hydrostatic (hoop) stress which a plastics pipe made of the material under consideration is expected to be able to withstand for 50 years at an ambient temperature of 20 °C using water as the internal test medium. The outside environment can be water or air. The standard provides a definitive procedure incorporating an extrapolation using test data at different temperatures analyzed by multiple linear regression analysis. The results permit the determination of material-specific design values in accordance with the procedures described in the relevant system standards. This multiple linear regression analysis is based on the rate processes most accurately described by $\log_{10}$(stress) versus $\log_{10}$(time) models..

The manufacture of polyethylene materials to be used in pressure pipes is discussed for example in an article by Scheirs et al (Scheirs, Bohm, Boot and Leevers: PE100 Resins for Pipe Applications, TRIP Vol. 4, No 12 (1996) pp. 408-415). WO 00/22040 discloses a pipe having good mechanical properties made from a bimodal resin.

EP 1 985 660 A1 discloses a pipe or a supplementary pipe article with improved slow crack growth resistance comprising a polyethylene composition comprising a base resin, which comprises a first ethylene homo- or copolymer fraction (A), and a second ethylene homo- or copolymer fraction (B), wherein fraction (A) has a lower average molecular weight than fraction (B), and wherein the base resin has a density in the range of 945 to 949 $kg/m^3$, an $MFR_5$ in the range of 0.2 to 0.4 g/10 min., a comonomer content of higher than 2.0 wt.-% and a $SHI_{(2.7/210)}$ in the range of 55 to 100.

EP 1 655 337 A1 discloses a polyethylene composition with improved homogeneity comprising a base resin which comprises (A) a first ethylene homo- or copolymer fraction, and (B) a second ethylene homo- or copolymer fraction, wherein fraction (A) has a lower molecular weight than fraction (B), the ratio of the $MFR_2$ of fraction (A) and the $MFR_5$ of the base resin being at least 50 and the composition has a white spot area of 1 % or below.

In US 2010/178443, US 2003/096901, EP 1 460 105, US 2007/282067, US 6 185 349 and US 6 878 784 some examples of bimodal compositions for pipes are described. Various modern techniques (pipe bursting, directional drilling, relining) have been developed combining faster and cheaper installation. These techniques may however be more aggressive and demanding to pipe materials, which can be in contact with hard or sharp objects. Depending of the type of soil in the specific area of installation, higher stresses can be created to the pipes. Therefore, impact properties such as rapid crack propagation resistance (RCPR) and slow crack growth resistance (SCGR) are required as well. The RCPR is usually measured by the so-called S4 test (Small Scale Steady State), which has been developed at Imperial College, London, and which is described in ISO 13477:2008. In this test the key parameter is the critical temperature ($T_{crit}$) i.e. the ductile brittle transition temperature as measured according to ISO 13477-2008 which is the lowest temperature at which the pipe passes the test. However, improvement of RCPR and pressure resistance are partly contradicting properties.

Further properties which are desirable to improve are processability, tensile modulus short term pressure resistance and sagging resistance of a pipe material.

Therefore, it is the object underlying the present invention to provide an improved polyolefin composition with improved pressure resistance as well as impact properties, especially rapid crack propagation resistance, while properties such as slow crack growth resistance, processability, tensile modulus, short term pressure resistance and sagging resistance are maintained at a high level.

It is the finding of the present invention that the above objects can be achieved by providing a polyethylene composition according to claims 1 to 7

Such a polyethylene composition is obtainable by a process according to claims 8 to 11 comprising the steps of:

i) polymerising in a first polymerization step ethylene monomers, and optionally one or more alpha-olefin comonomers, in the presence of a Ziegler-Natta catalyst to obtain a first ethylene homo- or copolymer fraction (A)
ii) polymerising in a second polymerization step ethylene monomers, and optionally one or more alpha-olefin comonomers, in the presence of a Ziegler-Natta catalyst to obtain a second ethylene homo- or copolymer fraction (B) having a higher average molecular weight than fraction (A),

wherein the first polymerisation step (i) and the second polymerisation step (ii) are conducted in any order.

The above objects can further be achieved by the use of the above polyethylene composition for the production of an article, preferably a pipe or a fitting.

The polyethylene composition of the present invention preferably is characterized by a substantially improved rapid crack propagation resistance expressed by the critical temperature $T_{crit}$ in the S4 test according to ISO 13477:2008, while simultaneously the pressure resistance (design stress rating according to ISO 9080:2003) and the short term pressure resistance tested according to ISO 1167-1:2006 are maintained at a high level.

According to preferred embodiments of the present invention the polyethylene composition has a $T_{crit}$ of -10 °C or lower, preferably -12 °C or lower or even -14 °C or lower.

At the same time the polyethylene compositions of the present invention preferably exhibit excellent short term pressure resistance tested at 12.4 MPa and 20 °C according to ISO 1167-1:2006 of at least 100 h, preferably at least 150 h, even more preferably at least 200 h. Preferably, the polyethylene compositions exhibit excellent short term pressure resistance tested at 5.7 MPa and 80 °C according to ISO 1167-1:2006 of at least 1000 h, preferably at least 1500 h, even more preferably at least 2000 h. The compositions further exhibit slow crack growth resistance determined on notched pipes at the conditions specified in the method section below according to ISO 13479:1997 of at least 1500 h, preferably at least 2000 h, or even at least 2500 h.

The compositions preferably exhibit a design stress rating tested according to ISO 9080:2003 of MRS 8.0 (withstanding an internal stress of 8.0 MPa for 50 years at 20 °C), preferably 10.0 (withstanding an internal stress of 10.0 MPa for 50 years at 20 °C) or even higher.

It is further important to ensure that the polymer, for example, after being extruded into a pipe and before being cooled, does not flow by gravity from the upper part of the pipe to a lower part and therefore create a non-uniform distribution of polymer around the cross-section of the pipe. This phenomenon is called tendency of a polymer to display gravity flow or "sagging". The sagging resistance is the property of a polymer pipe to withstand this tendency. Sagging resistance may be determined by a rheological or a melt index method. The determination is done in the present invention by a method which correlates well with the above mentioned melt index method, and relates to the rheology of the polymer. The method is based on determination of the viscosity of the polymer at a very low, constant shear stress of 747 Pa ($eta_{747}$), as described in detail below. The viscosity of the polymer at this shear stress is determined at a temperature of 190 °C and has been found to be inversely proportional to the gravity flow of the polymer, i.e. the greater the viscosity the lower the gravity flow. According to the present invention the polyethylene compositions exhibit a viscosity at $eta_{747}$ of at least 400 kPa*s, preferably at least 450 kPa*s, even more preferably at least 500 kPa*s.

The melt flow rate (MFR) is another important property of the multimodal polyethylene for pipes according to the invention. The MFR is determined according to ISO 1133 and is indicated in g/10 min. The MFR is an indication of the flowability, and hence the processability, of the polymer. The higher the melt flow rate, the lower the viscosity of the polymer. The MFR is determined at different loadings such as 2.16 kg ($MFR_2$; ISO 1133, condition D), 5 kg ($MFR_5$; ISO 1133, condition T) or 21.6 kg ($MFR_{21}$; ISO 1133, condition G).

According to the present invention it has now been surprisingly found that a superior performance of rapid crack propagation and pressure resistance can be achieved if the melt flow rate of the low molecular weight (LMW) component of the polyethylene composition (polymer fraction (A)) is reduced to certain. The $MFR_2$ of the LMW component of the polyethylene composition according to the present invention is not more than 100 g/10 min, preferably not more than 90 g/10 min, even more preferably not more than 80 g/10 min.

The polymer fraction (A) preferably is an ethylene homopolymer. The polymer fraction (A) preferably has a density of 960 to 980 kg/m$^3$.

It is preferred that polymer fraction (B) which constitutes the high molecular weight HMW component of the polyethylene composition is a copolymer of ethylene and at least one alpha-olefin comonomer. The alpha-olefin comonomer preferably is selected from alpha-olefin comonomers with 3 to 12 carbon atoms, more preferably 4 to 8 carbon atoms. Suitable alpha-olefin comonomer species are 1-butene, 1-hexene and 1-octene. Thereby, 1-butene and 1-hexene are especially preferred.

The compositions may preferably have a $MFR_5$ of 0.6 g/10 min or lower, more preferably 0.4 g/10 min or lower and even more preferably 0.3 g/10 min or lower. The $MFR_{21}$ may range from 1 to 20 g/10 min, preferably from 3 to 15 g/10 min, even more preferably from 5 to 10 g/10 min.

Another characterizing feature of the present invention is the density of the multimodal polyethylene base resin. For reasons of strength the density lies in the medium to high density range, more particularly in the range 930-970 kg/m$^3$. Preferably, densities of 940-965 kg/m$^3$ are used. It is possible to obtain pressure pipes of a higher design stress rating with high density multimodal polyethylene than with medium density multimodal polyethylene.

The polyethylene composition preferably comprises at least 0.1 mol%, more preferably at least 0.2 mol% of at least one alpha-olefin comonomer. The amount of comonomer is preferably at most 3.0 mol%, more preferably at most 2.0 mol%, and still more preferably at most 1.0 mol%, determined by quantitative molten state nuclear-magnetic resonance (NMR) spectroscopy.

In addition to the base resin, usual additives for utilization with polyolefins, such as pigments, stabilizers (antioxidant agents), antacids and/or anti-UVs, antistatic agents and utilization agents (such as processing aid agents) may be present in the polyethylene composition. Preferably, the amount of these additives is 10 wt% or below, further preferred 8 wt% or below, still more preferred 4 wt% or below of the total composition. The composition may comprise carbon black in an amount of 8 wt% or below, further preferred of 1 to 4 wt%, of the total composition.

It should be noted that the multimodal polymer composition of the present invention is characterized, not by any single one of the above defined features, but by the combination of all the features defined in claim 1. By this unique combination of features it is possible to obtain pressure pipes of superior performance, particularly with regard to processability, rapid crack propagation (RCP) resistance, slow crack growth resistance, design stress rating, short term pressure resistance, and impact strength.

The polyethylene composition of the present invention is specifically designed for the manufacture of pressure pipes. For this purpose the composition may preferably be a multimodal polyethylene, more preferably a bimodal polyethylene. The prefix "multi" relates to the number of different polymer fractions the composition is consisting of. Thus, for example, a composition consisting of two fractions only is called "bimodal".

The form of the molecular weight distribution curve, i.e. the appearance of the graph of the polymer weight fraction as function of its molecular weight, of such a multimodal polyethylene will show two or more maxima or at least be distinctly broadened in comparison with the curves for the individual fractions.

For example, if a polymer is produced in a sequential multistage process, utilising reactors coupled in series and using different conditions in each reactor, the polymer fractions produced in the different reactors will each have their own molecular weight distribution and weight average molecular weight. When the molecular weight distribution curve of such a polymer is recorded, the individual curves from these fractions are superimposed into the molecular weight distribution curve for the total resulting polymer product, usually yielding a curve with two or more distinct maxima.

The multimodal polyethylene may comprise a low molecular weight (LMW) ethylene homopolymer fraction and a high molecular weight (HMW) ethylene copolymer fraction. Depending on whether the multimodal polyethylene is bimodal or has a higher modality the LMW and HMW fractions may comprise only one fraction each or include sub-fractions, i.e. the LMW may comprise two or more LMW sub-fractions and similarly the HMW fraction may comprise two or more HMW sub-fractions. According to preferred embodiments, the LMW fraction is an ethylene homopolymer and the HMW fraction is an ethylene copolymer, i.e. it is only the HMW fraction that includes a comonomer. Preferably, the HMW fraction is a copolymer of ethylene with at least one further alpha-olefin comonomer selected from 1-propene, 1-butene, 1-pentene, 1-hexene and 1-octene. As a matter of definition, the expression "ethylene homopolymer" used herein relates to an ethylene polymer that consists substantially, i.e. to at least 97% by weight, preferably at least 99% by weight, more preferably at least 99.5% by weight, and most preferably at least 99.8% by weight of ethylene and thus is an HD ethylene polymer which preferably only includes ethylene monomer units. Moreover, the lower limit of the molecular weight range of the HMW fraction is 3 500, preferably 4000. This means that almost all ethylene copolymer molecules in the multimodal polyethylene pipe composition of the invention have a molecular weight of at least 3500, preferably at least 4000. The reason for this is that the presence of comonomer in the LMW fraction gives a pressure pipe with poor strength.

In the present invention the proportions of the LMW and HMW fractions (also known as the "split" between the fractions) are selected properly. More particularly, the weight ratio of the LMW fraction to the HMW fraction should preferably lie in the range (35-55):(65-45), more preferably (40-60):(60-40), most preferably (45-55):(55-45). If the split lies within these ranges, the proportion of the HMW fraction results in high strength values and a low amount of gels.

The molecular weight distribution, as defined by the ratio of the weight average molecular weight (Mw) to the number average molecular weight (Mn), i.e. Mw/Mn, of the multimodal polyethylene may range from rather narrow to rather broad values and preferably lies in the range of from 3 to 40, preferably from 15 to 35, even more preferably from 20 to 35. The reason for this is to obtain a pressure pipe with a desired combination of good processability and good strength. Further, the number average molecular weight, Mn, lies in the range of from 8.000 to 15.000, preferably from 9.000 to 14.000, while the weight average molecular weight, Mw lies in the range of from 180.000 to 330.000 , preferably of from 200.000 to 320.000.

The polyethylene compositions of the present invention are usually made by a multi-stage process, i.e. a process which makes use of at least two reactors, one for producing a lower molecular weight component and a second for producing a higher molecular weight component. These reactors may be employed in parallel, in which case the components must be mixed after production. More commonly, the reactors are employed in series, such that the products of one reactor are used as the starting material in the next reactor, e.g. one component is formed in the first reactor and the second is formed in the second reactor in the presence of the first component. In this way, the two components are more intimately mixed, since one is formed in the presence of the other.

The polymerization reactions used in each stage may involve conventional ethylene homo-polymerization or copolymerization reactions, e.g. gas phase, slurry phase, liquid phase polymerizations, using conventional reactors, e.g. loop reactors, gas phase reactors, batch reactors, etc

The polymerization may be carried out continuously or batchwise, preferably the polymerization is carried out continuously.

Known two-stage processes are for instance liquid phase-liquid phase processes, gas phase-gas phase processes and liquid phase-gas phase processes. It is also known that these two-stage processes can further be combined with one or more additional polymerization steps selected from gas phase, slurry phase or liquid phase polymerization processes.

Multimodal polyethylene compositions of the present invention are preferably produced in a multistage process, where lower molecular weight and higher molecular weight polymers (components) are produced in different polymerization steps, in any order.

A relatively low density (or HMW fraction) copolymer can be prepared in the first polymerization step and the relatively high density (or LMW fraction) polymer in the second polymerization step. This can be referred to as the reverse mode. Alternatively, the low molecular weight polymer can be prepared in the first polymerization step and the high molecular weight copolymer in the second polymerization step. This can be referred to as the normal mode and is preferred.

If the LMW fraction is produced in the first polymerization step, the melt flow rate of the first ethylene polymer fraction (A) can be directly measured as described herein. If the LMW fraction is produced in the second polymerization step, the melt flow rate of the LMW ethylene polymer fraction (A) can be calculated on the basis of the weight ratios of the LMW fraction and the HMW fraction and the molecular weight of the total polyethylene composition.

In the present invention the melt flow rate of the LMW ethylene polymer fraction is determined according to the equation developed by Hagström and co-workers in B. Hagström: Prediction of melt flow rate (MFR) of bimodal polyethylenes based on MFR of their components, in: Conference on Polymer Processing (The Polymer Processing Society), Extended Abstracts and Final Programme, Gothenburg, August 19-21, 1997, 4:13, and is explained in the following.

$$MFR = \left[ w \left( \frac{1}{MFR_1} \right)^{\frac{w^{-b}}{a}} + (1 - w) \left( \frac{1}{MFR_2} \right)^{\frac{w^{-b}}{a}} \right]^{-aw^b}$$

wherein

MFR is the melt flow rate of the blend
$MFR_1$ is the melt flow rate of component 1
$MFR_2$ is the melt flow rate of component 2
w is the weight fraction in percent
a and b are material parameters as specified below.

Different constants are used for different weights used in the MFR measurement and thus also the flow rate ratio ($FRR_{21/2}$ = $MFR_{21}/MFR_2$) can be predicted. For determining these constants, components of very different molecular weights (e.g. 20.000 g/mol and 500.000 g/mol) were melt homogenized at 190 °C in a Brabender kneader and checked for resulting MFR and FRR. Mixing ratios were in the range of 0.4-0.6 for the HMW and LMW component. The constants in the above mixing rule were found to be $a_2$ = 5.2, $b_2$ = 0.7 and $a_{21}$ = 10.4, $b_{21}$ = 0.5, where the indices indicate the differing weights (2.16 kg and 21 kg) in the MFR measurements, respectively.

The experimental evaluation is based on Ziegler Natta derived polyethylene materials using a Lynx®200 polymerisation catalyst (manufactured by BASF).

In addition, subtracting GPC curves, when fractions of each polymer are known is also possible for determining melt flow rate of the polymer produced in the second stage of a multi-stage polymerization process.

A two-stage process can, for example be a slurry-slurry or a gas phase-gas phase process, particularly preferably a slurry-gas phase process. Optionally the process according to the invention can comprise one or two additional polymerization steps.

These optional one or two additional polymerization steps preferably comprise gas phase polymerization steps.

The slurry and gas stages may be carried out using any conventional reactors known in the art. A slurry phase polymerization may, for example, be carried out in a continuously stirred tank reactor; a batch-wise operating stirred tank reactor or a loop reactor. Preferably slurry phase polymerization is carried out in a loop reactor. In such reactors the slurry is circulated with a high velocity along a closed pipe by using a circulation pump. Loop reactors are generally known in the art and examples are given, for instance, in US-A-4582816, US-A-3405109, US-A-3324093, EP-A-479186 and US-A-5391654.

The term gas phase reactor encompasses any mechanically mixed, fluidized bed reactor, fast fluidized bed reactor or settled bed reactor or gas phase reactors having two separate zones, for instance one fluidized bed combined with one settled bed zone. Preferably the gas phase reactor for the second polymerization step is a fluidized bed reactor.

The slurry and gas phase processes are well known and described in the prior art.

Preferably, fraction (A) is polymerized in a slurry reactor. It is further preferred that fraction (B) is polymerised in a gas phase reactor.

In a preferred embodiment of the invention the LMW fraction is produced first and the HMW fraction is produced in the presence of LMW fraction. In this case the LMW fraction is the first polyethylene fraction (A) and the HMW fraction is the second polyethylene fraction (B).

The polymerisation catalysts for the production of the base resin include coordination catalysts of a transition metal, such as Ziegler-Natta (ZN), metallocenes, non-metallocenes, Cr-catalysts etc. The catalyst may be supported, e.g. with conventional supports including silica, Al-containing

supports and magnesium dichloride based supports. Preferably the catalyst is a ZN catalyst, more preferably the catalyst is a non-silica supported ZN catalyst, and most preferably a $MgCl_2$-based ZN catalyst.

The Ziegler-Natta catalyst further preferably comprises a group 4 (group numbering according to new IUPAC system) metal compound, preferably titanium, magnesium dichloride and aluminum.

The catalyst may be commercially available or be produced in accordance with or analogously to the literature. For the preparation of the preferable catalyst usable in the invention, reference is made to WO 2004/055068 and WO 2004/055069 of Borealis and EP 0 810 235, in particular concerning the general and all preferred embodiments of the catalysts described therein as well as the methods for the production of the catalysts. Particularly preferred Ziegler-Natta catalysts are described in EP 0 810 235.

The resulting end product consists of an intimate mixture of the polymers from the reactors, the different molecular-weight-distribution curves of these polymers together forming a molecular-weight-distribution curve having a broad maximum or several maxima, i.e. the end product is a multimodal polymer mixture.

It is preferred that the multimodal polyethylene composition according to the invention is a bimodal polyethylene mixture consisting of polymer fractions (A) and (B), optionally further comprising a small prepolymerisation fraction. It is also preferred that this bimodal polymer mixture has been produced by polymerisation as described above under different polymerisation conditions in two or more polymerisation reactors connected in series. Owing to the flexibility with respect to reaction conditions thus obtained, it is most preferred that the polymerisation is carried out in a loop reactor/a gas-phase reactor combination. Preferably, the polymerisation conditions in the preferred two-stage method are so chosen that the comparatively low-molecular polymer having no content of comonomer is produced in one stage, preferably the first stage, owing to a high content of chain-transfer agent (hydrogen gas), whereas the high-molecular polymer having a content of comonomer is produced in another stage, preferably the second stage. The order of these stages may, however, be reversed.

In the preferred embodiment of the polymerisation in a loop reactor followed by a gas-phase reactor, the polymerisation temperature in the loop reactor preferably is 85 to 115 °C, more preferably is 90 to 105 °C, and most preferably is 92 to 100 °C, and the temperature in the gas-phase reactor preferably is 70 to 105 °C, more preferably is 75 to 100 °C, and most preferably is 82 to 97 °C. The pressure in the loop reactor is typically from 1 to 150 bar, preferably from 1 to 100 bar and the pressure in the gas phase reactor is typically at least 10 bar, preferably at least 15 bar but typically not more than 30 bar, preferably not more than 25 bar.

The polymerisation in the slurry phase reactor usually takes place in an inert diluent, typically a hydrocarbon diluent which is selected from a group comprising $C_3$ to $C_8$ hydrocarbons, such as methane, ethane, propane, n-butane, isobutane, hexanes such as n-hexane, heptanes, octanes etc. or their mixtures. Preferably the diluent is a low boiling hydrocarbon having from 1 to 4 carbon atoms or a mixture of such hydrocarbons. An especially preferred diluent is propane, possibly containing minor amounts of methane, ethane and/or butane. The inert diluent can be the same or different in the different polymerisation steps.

The ethylene content in the fluid phase of the slurry in the slurry phase reactor may be from 0.5 to 50 % by mole, preferably from 1 to 20 % by mole, and in particular from 2 to 10 % by mole.

In a preferred embodiment of a gas phase reactor, the polymerization takes place in a fluidised bed gas phase reactor where an olefin is polymerised in the presence of a polymerisation catalyst in an upwards moving gas stream. The reactor typically contains a fluidised bed comprising the growing polymer particles containing the active catalyst located above a fluidisation grid. The polymer bed is fluidised with the help of a fluidisation gas comprising the olefin monomer, eventually comonomer(s), eventually chain growth controllers or chain transfer agents, such as hydrogen, and eventually inert gas.

Also antistatic agent(s) may be introduced into the gas phase reactor if needed. Suitable antistatic agents and methods to use them are disclosed, amongst others, in US-A-5,026,795, US-A-4,803,251, US-A-4,532,311, US-A-4,855,370 and EP-A-560 035. They are usually polar compounds and include, amongst others, water, ketones, aldehydes alcohols.

The polymerization process may further comprise a pre-polymerisation step which precedes the polymerisation steps. The purpose of the pre-polymerisation is to polymerise a small amount of polymer onto the catalyst at a low temperature and/or a low monomer concentration. By pre-polymerisation it is possible to improve the performance of the catalyst in slurry and/or modify the properties of the final polymer. The pre-polymerisation step may be conducted in slurry or gas phase. Preferably the pre-polymerisation is conducted in slurry.

Thus, the pre-polymerisation step may be conducted in a loop reactor. The pre-polymerisation is then preferably conducted in an inert diluent, typically a hydrocarbon diluent such as methane, ethane, propane, n-butane, isobutene, pentanes, hexanes, heptanes, octanes or their mixtures. Preferably the diluent is a low boiling hydrocarbon having from 1 to 4 carbon atoms or a mixture of such hydrocarbons. The most preferred diluent is propane.

The temperature in the pre-polymerisation step is typically from 0 °C to 90 °C., preferably from 20 °C to 80 °C and more preferably from 40 °C to 70 °C.

The pressure is not critical and is typically from 1 bar to 150 bar, preferably from 10 bar to 100 bar.

A chain-transfer agent, preferably hydrogen, is added as required to the reactors, and preferably 200 to 800 moles of $H_2$/kmoles of ethylene are added to the reactor, when the LMW fraction is produced in this reactor, and 0 to 50 moles of $H_2$/kmoles of ethylene are added to the gas phase reactor when this reactor is producing the HMW fraction.

The term "base resin" means the entirety of polymeric components in the polyethylene composition according to the invention, usually making up at least 90 wt% of the total composition. Preferably, the base resin is consisting of polymer fractions (A) and (B), optionally further comprising a prepolymer fraction in an amount of up to 20 wt%, more preferably up to 10 wt%, and most preferably up to 5 wt% of the total base resin.

Optionally, additives or other polymer components can be added to the composition during the compounding step in the amount as described above. Preferably, the composition of the invention obtained from the reactor is compounded in the extruder together with additives in a manner known in the art.

The composition of the invention, preferably if produced in a process comprising a compounding step, wherein the composition, i.e. the blend, which is typically obtained as a polyolefin base resin powder from the reactor, is extruded in an extruder and then pelletised to polymer pellets in a manner known in the art. The extruder may be e.g. any conventionally used extruder. As an example of an extruder for the present compounding step may be those supplied by Japan Steel works, Kobe Steel or Farrel-Pomini, e.g. JSW 460P or JSW CIM90P.

In certain embodiments, the extrusion step is carried out using feed rates of 100 kg/h to 500 kg/h, more preferably 150 kg/h to 300 kg/h.

The screw speed of the extruder may be 200 rpm to 500 rpm, more preferably 300 rpm to 450 rpm.

In certain embodiments, in said extrusion step the SEI (specific energy input) of the extruder may be 100 kWh/ton to 400 kWh/ton, more preferably 200 kWh/ton to 300 kWh/ton.

The melt temperature in said extrusion step is preferably 200°C to 300°C, more preferably 230°C to 270°C.

In other preferred embodiments, the conditions may also differ from the above ranges.

Furthermore, the present invention relates to an article, preferably a pipe or a fitting, comprising the polyethylene composition of the invention or obtainable by a multi-stage process as described above, and to the use of such a polyethylene composition for the production of an article, preferably a pipe or a fitting. The polyethylene composition may also be used for increasing the lifetime of a pipe or a fitting.

**Examples**

**1. Definitions and measurement methods**

**a) Density**

Density of the polymer was measured according to ISO 1183-1:2004 (method A) on compression moulded specimen prepared according to EN ISO 1872-2(Feb 2007) and is given in $kg/m^3$.

**b) Melt Flow Rate**

The melt flow rate (MFR) is determined according to ISO 1133 and is indicated in g/10 min. The MFR is an indication of the flowability, and hence the processability, of the polymer. The higher the melt flow rate, the lower the viscosity of the polymer. The MFR is determined at 190 °C for polyethylene and at a loading of 2.16 kg ($MFR_2$), 5.00 kg ($MFR_5$) or 21.6 kg ($MFR_{21}$).
The quantity FRR (flow rate ratio) is an indication of molecular weight distribution and denotes the ratio of flow rates at different loadings. Thus, $FRR_{21/5}$ denotes the value of $MFR_{21}/MFR_5$.

**c) Comonomer content**

Quantitative nuclear-magnetic resonance (NMR) spectroscopy was used to quantify the comonomer content of the polymers.
Quantitative $^{13}C\{^1H\}$ NMR spectra recorded in the molten-state using a Bruker Advance III 500 NMR spectrometer operating at 500.13 and 125.76 MHz for $^1H$ and $^{13}C$ respectively. All spectra were recorded using a $^{13}C$ optimised 7 mm magic-angle spinning (MAS) probehead at 150°C using nitrogen gas for all pneumatics.
Approximately 200 mg of material was packed into a 7 mm outer diameter zirconia MAS rotor and spun at 4 kHz. This setup was chosen primarily for the high sensitivity needed for rapid identification and accurate quantification (Klimke, K., Parkinson, M., Piel, C., Kaminsky, W., Spiess, H.W., Wilhelm, M., Macromol. Chem. Phys. 2006;207:382; Parkinson, M., Klimke, K., Spiess, H.W., Wilhelm, M., Macromol. Chem. Phys. 2007;208:2128; Castignolles, P., Graf, R., Parkinson, M., Wilhelm, M., Gaborieau, M., Polymer 50 (2009) 2373). Standard single-pulse excitation was employed utilising the transient NOE at short recycle delays of 3s (Pollard, M., Klimke, K., Graf, R., Spiess, H.W., Wilhelm, M., Sperber, O., Piel, C., Kaminsky, W., Macromolecules 2004;37:813; Klimke, K., Parkinson, M., Piel, C., Kaminsky, W., Spiess, H.W., Wilhelm, M., Macromol. Chem. Phys. 2006;207:382) and the RS-HEPT decoupling scheme (Filip, X., Tripon, C., Filip, C., J. Mag. Resn. 2005, 176, 239; Griffin, J.M., Tripon, C., Samoson, A., Filip, C., and Brown, S.P., Mag. Res. in Chem. 2007 45, S1, S198). A total of 1024 (1k) transients were acquired per spectrum. This setup was chosen due its high sensitivity towards low comonomer contents.
Quantitative $^{13}C\{^1H\}$ NMR spectra were processed, integrated and quantitative properties determined using custom spectral analysis automation programs. All chemical shifts are internally referenced to the bulk methylene signal ($\delta+$) at 30.00 ppm (J. Randall, Macromol. Sci., Rev. Macromol. Chem. Phys. 1989, C29, 201).
Characteristic signals corresponding to the incorporation of 1-butene were observed (J. Randall, Macromol. Sci., Rev. Macromol. Chem. Phys. 1989, C29, 201) and all contents calculated with respect to all other monomers present in the polymer.
Characteristic signals resulting from isolated 1-butene incorporation i.e. EEBEE comonomer sequences, were observed. Isolated 1-butene incorporation was quantified using the integral of the signal at 34.23 ppm assigned to the aB2 sites accounting for the number of reporting sites per comonomer:

$$B = (1/2)*I_{\alpha B2}$$

With no other signals indicative of other comonomer sequences, i.e. consecutive comonomer incorporation observed, the total 1-butene comonomer content was calculated based solely on the amount of isolated 1-butene sequences:

$$B_{total} = B$$

Characteristic signals resulting from saturated end-groups were observed. The content of such saturated end-groups was quantified using the average of the integral of the signals at 22.84 and 32.23 ppm assigned to the 2s and 3s sites respectively:

$$S = (1/2)*( I_{2S} + I_{3S} )$$

Characteristic signals resulting from unsaturated vinyl end-groups were also observed. The content of such unsaturated end-groups was quantified using the integral of the signals at 33.93 ppm assigned to the $\alpha U$ sites:

$$U = I_{\alpha U}$$

The relative content of ethylene was quantified using the integral of the bulk methylene ($\delta +$) signals at 30.00 ppm

$$E = (1/2)*I_{\delta +}$$

The total ethylene comonomer content was calculated based the bulk methylene signals and accounting for ethylene units present in other observed comonomer sequences or end-groups:

$$E_{total} = E + (5/2)*B + (3/2)*S + (3/2)*U$$

The total mole fraction of 1-butene in the polymer was then calculated as:

$$fB = ( B_{total} / ( E_{total} + B_{total} )$$

The total comonomer incorporation of 1-butene in mole percent was calculated from the mole fraction in the usual manner:

$$B [mol\%] = 100 * fB$$

The total comonomer incorporation of 1-butene in weight percent was calculated from the mole fraction in the standard manner:

$$B [wt\%] = 100 * ( fB * 56.11) / ( (fB * 56.11) + ((1-fB) * 28.05) )$$

**d) Determination of the average molecular weight (Mn, Mw) and the molecular weight distribution (MWD)**

The average molecular weight (Mw, Mn), the molecular weight distribution (MWD) and its broadness, described by the polydispersity index, PDI = Mw/Mn (wherein Mn is the number average molecular weight and Mw is the weight average molecular weight) were determined by Gel Permeation Chromatography (GPC) according to ISO 16014-4:2003 and ASTM D 6474:1999. A PolymerChar GPC instrument, equipped with infrared (IR) detector was used with 3 x Olexis and 1x Olexis Guard columns from Polymer Laboratories and 1,2,4-trichlorobenzene (TCB, stabilized with 250 mg/l 2,6-di tert butyl-4-methyl-phenol) as solvent at 160 °C and at a constant flow rate of 1 ml/min. 200 $\mu$l of sample solution were injected per analysis. The column set was calibrated using universal calibration (according to ISO 16014-2:2003) with at least 15 narrow MWD polystyrene (PS) standards in the range of 0,5 kg/mol to 11 500 kg/mol. Mark Houwink constants for PS, PE and PP used are as described per ASTM D 6474-99. All samples were prepared by dissolving 5.0 - 9.0 mg of polymer in 8 ml (at 160 °C) of stabilized TCB (same as in the mobile phase) for 2.5 hours for PP or 3 hours for PE at 160°C under continuous gentle shaking in the autosampler of the GPC instrument.
As it is known in the art, the weight average molecular weight of a blend can be calculated if the molecular weights of its components are known according to:

$$Mw_b = \sum_i w_i \cdot Mw_i$$

where $Mw_b$ is the weight average molecular weight of the blend, $w_i$ is the weight fraction of component "i" in the blend and $Mw_i$ is the weight average molecular weight of the component "i".

The number average molecular weight can be calculated using the mixing rule:

$$\frac{1}{Mn_b} = \sum_i \frac{w_i}{Mn_i}$$

where $Mn_b$ is the weight average molecular weight of the blend, $w_i$ is the weight fraction of component "i" in the blend and $Mn_i$ is the weight average molecular weight of the component "i".

**e) Rheological parameters**

The method for determination of the viscosity of the polymer at 747 Pa and 190 °C. is conducted by using a rheometer, preferably a Bohlin CS Melt Rheometer. Rheometers and their function have been described in "Encyclopedia of Polymer Science and Engineering", 2nd Ed., Vol. 14, pp. 492-509. The measurements are performed under a constant stress between two 25 mm diameter plates (constant rotation direction). The gap between the plates is 1.8 mm. An 1.8 mm thick polymer sample is inserted between the plates.

The sample is temperature conditioned during 2 min before the measurement is started. The measurement is performed at 190 °C. After temperature conditioning the measurement starts by applying the predetermined stress. The stress is maintained during 1800 s to let the system approach steady state conditions. After this time the measurement starts and the viscosity is calculated.

The measurement principle is to apply a certain torque to the plate axis via a precision motor. This torque is then translated into a shear stress in the sample. This shear stress is kept constant. The rotational speed produced by the shear stress is recorded and used for the calculation of the viscosity of the sample. The conditions applied are generally described in ISO 6721-10:1999.

**f) Rapid crack propagation**

The rapid crack propagation (RCP) resistance of a pipe may be determined according to a method called the S4 test (Small Scale Steady State), which has been developed at Imperial College, London, and which is described in ISO 13477:2008. The outer diameter of the pipe is about 110 mm or greater and its wall thickness about 10 mm or greater. When determining the RCP properties of a pipe in connection with the present invention, the outer diameter and the wall thickness have been selected to be 110 mm and 10 mm, respectively. The length of the pipe is 785 mm. While the exterior of the pipe is at ambient pressure (atmospheric pressure), the pipe is pressurised internally, and the internal pressure in the pipe is kept constant at a pressure of 4.0 bar positive pressure. The length of the gauge is 590 mm. The pipe and the equipment surrounding it are conditioned to a predetermined temperature. A number of discs have been mounted on a shaft inside the pipe to prevent decompression during the tests. A knife projectile is shot, with well-defined forms, and a mass of 1500 g towards the pipe close to its one end in the so-called initiating zone in order to start a rapidly running axial crack. The speed of the knife is 16 +/- 1 m/s. The initiating zone is provided with an abutment for avoiding unnecessary deformation of the pipe. The test equipment is adjusted in such a manner that crack initiation takes place in the material involved, and a number of tests are effected at varying temperatures. The axial crack length in the measuring zone, having a total length of 4.7 diameters, is measured for each test and is plotted against the set test temperature. If the crack length exceeds 4.7 diameters, the crack is assessed to propagate. If the pipe passes the test at a given temperature, the temperature is lowered successively until a temperature is reached, at which the pipe no longer passes the test, i.e. the crack propagation exceeds 4.7 times the pipe diameter. The critical temperature ($T_{crit}$) i.e. the ductile brittle transition temperature as measured according to ISO 13477:2008 is the lowest temperature at which the pipe passes the test. The lower the critical temperature the better, since it results in an extension of the applicability of the pipe.

**g) Short term Pressure resistance (STPR)**

The pressure test on un-notched 32 mm SDR 11 pipes having a length of 450 mm is carried out in water-inside and water-outside environment according to ISO 1167-1:2006. End caps type A were used. The time to failure is determined in hours. A hoop stress of 12.4 MPa and a temperature of 20 °C as well as a hoop stress of 5.7 MPa and a temperature of 80 °C were applied.

**h) Slow crack growth resistance**

The slow crack propagation resistance is determined according to ISO 13479:1997 in terms of the number of hours the pipe withstands a certain pressure at a certain temperature before failure. The pressure test is carried out on notched pipes having a diameter of 110 mm. A pressure of 9.2 bars and a temperature of 80 °C have been used to obtain an aimed stress of 4.6 MPa. The measurement is made on 110 mm SDR 11 pipes. Notching is made with a climb milling cutter with a 60° included-angle V-cutter conforming to ISO 6108, having a cutting rate of (0,010 $\pm$ SO 6108, having a c. The used cutter has 24 teeth and the speed of the cutter is 680 rpm. The remaining ligament is 0.82-0.78 times the minimum wall thickness. The depth of the notch is calculated using equation below. h is the notch depth in mm. The four notches are equally placed in the pipe circumference. The length of the notch is 110+/- 1mm.

$$h = 0{,}5\left[d_{em} - \sqrt{\left(d_{em}^2 - b_s^{\,2}\right)}\right] + 0{,}866\, b_s$$

where

$b_s$ is the width of machined surface of the notch, in millimetres;
$d_{em}$ is the measured mean pipe outside diameter, in millimetres.

**i) Charpy impact strength**

Charpy impact strength was determined according to ISO179/1eA:2000 on V-notched samples of 80*10*4 mm$^3$ at 0 °C (Charpy impact strength (0 °C)) and -20 °C (Charpy impact strength (-20 °C)). Samples were milled from plaques of 4 mm thickness prepared by compression molding according to ISO 293:2004 using the conditions defined in chapter 3.3 of ISO 1872-2:2007.

**j) Tensile modulus**

As a measure for stiffness, the tensile modulus (E-modulus) of the compositions was measured at 23 °C on compression molded specimens according to ISO 527-2:1993. The specimens (1B type) were milled from plaques of 4 mm thickness prepared by compression molding according to ISO 293:2004 using the conditions defined in chapter 3.3 of ISO 1872-2:2007. The modulus was measured at a speed of 1 mm/min.

**2. Production of polymer compositions and pipes**

A base resin was produced in a multistage reaction comprising a first (pre)polymerisation stage in slurry in a 50 dm$^3$ loop reactor and in the presence of a polymerisation catalyst supplied by BASF under the trade name Lynx 200™ which is a magnesium dichloride based titanium chloride catalyst. Triethylaluminum was used as a cocatalyst followed by a flashing step after the slurry reactor and transferring the slurry to a 500 dm$^3$ loop reactor wherein polymerisation was continued in slurry to produce the low molecular weight component, and a second polymerisation in a gas phase reactor in the presence of the product from the second loop reactor to produce the comonomer containing high molecular weight component. As comonomer, 1-butene has been used.
The resulting polymer was purged with nitrogen (about 50 kg/h) for one hour, stabilised with 2200 ppm of Irganox B225 and 1500 ppm Ca-stearate and then extruded to pellets in a counter-rotating twin screw extruder CIM90P (manufactured by Japan Steel Works) while carbon black was added in a masterbatch composition (final concentration in the polymer composition: 2.3 wt.%) so that the throughput was 232 kg/h and the screw speed was 400 rpm.
The polymerisation conditions applied are listed in Table 1. Selected properties of the prepared polymer composition are given in Table 2.
In Table 3 mechanical and rheological properties of the inventive and the comparative composition are shown.

**Table 1**

| Lot | | Inventive Example | Comparative Example |
|---|---|---|---|
| **PREPOLYMERISATION** | | | |
| temperature | °C | 60 | 60 |
| pressure | bar | 59 | 60 |
| catalyst feed | g/h | 3.5 | 5.8 |
| cocatalyst feed | g/h | 3.9 | 6.7 |
| Antistatic agent | ppm | 13.5 | 10 |
| $C_2$ feed | kg/h | 2.0 | 2.0 |
| $H_2$ feed | g/h | 12.1 | 10.3 |
| $C_4$ feed | g/h | 0.0 | 0.0 |
| $C_3$ feed | kg/h | 51.0 | 46.9 |
| production rate | kg/h | 1.9 | 1.9 |
| split | wt-% | 2.9 | 2.8 |
| **LOOP POLYMERISATION** | | | |
| temperature | °C | 95 | 95 |
| pressure | bar | 55 | 57 |
| cocatalyst feed | g/h | 3.9 | 5.8 |
| Al/Ti | mol/mol | 15.5 | 15.5 |
| $C_2$ feed | kg/h | 37 | 38 |
| $H_2$ feed | g/h | 64 | 205 |
| $C_3$ feed | kg/h | 92 | 90.8 |
| $H_2/C_2$ ratio | mol/kmol | 247 | 752 |
| production rate | kg/h | 34.4 | 35.3 |
| split | wt-% | 53 | 52 |
| MFR 190°C 2.16 kg | g/10min | 54 | 522 |
| **GAS PHASE POLYMERISATION** | | | |
| temperature | °C | 85 | 85 |
| pressure | bar | 20 | 20 |
| $C_2$ feed | kg/h | 40 | 41 |
| $H_2$ feed | g/h | 0.00 | 2.8 |
| $C_4$ feed | kg/h | 1.7 | 1.2 |
| production rate | kg/h | 29 | 30 |
| split | wt-% | 44 | 45 |
| Density | | 948.2 | 949.4 |
| **EXTRUSION STEP** | | | |
| feed | kg/h | 232 | 232 |
| screw speed | rpm | 400 | 350 |
| throttle valve opening | mm | 15 | 13 |
| SEI | kWh/kg | 251 | 255 |
| melt temperature | °C | 265 | 271 |
| **FINAL PROPERTIES** | | | |
| Final $MFR_5$ | g/10min | 0,2 | 0,23 |
| Final $MFR_{21}$ | g/10min | 6,6 | 7,3 |
| $FRR_{21/5}$ | | 33 | 31,7 |
| Compound density | kg/m$^3$ | 961 | 961,3 |

**Table 2**

| | Inventive example | Comparative example |
|---|---|---|
| Low molecular weight fraction $MFR_2$, g/10 min | 54 | 522 |
| Composition $MFR_5$, g/10 min | 0.20 | 0.23 |
| Composition $MFR_{21}$, g/10 min | 6.6 | 7.3 |
| $FRR_{21/5}$ | 33.0 | 31.7 |
| Base resin density, $kg/m^3$ | 948.2 | 949.4 |
| Compound density, $kg/m^3$ | 961.0 | 961.3 |
| Butene content, mol% | 0.44 | 0.43 |
| Mn, g/mol | 10700 | 7500 |
| Mw, g/mol | 282000 | 228000 |

**Table 3**

| | Inventive example | Comparative example |
|---|---|---|
| Tensile modulus, MPa ISO 527-2:1993 | 1122 | 1127 |
| Charpy notched impact strength at 0 °C, $kJ/m^2$ (ISO 179/1 eA) | 19.1 | 16.2 |
| Charpy notched impact strength at -20 °C, $kJ/m^2$ (ISO 179/1eA) | 9.8 | 13.8 |
| Viscosity at $eta_{747}$, kPa*s (ISO 6721-10:1999) | 810 | 673 |
| RCP test-critical temperature, °C (ISO 13477:2008) | -14 | -8 |
| STPR test at 12.4 MPa/20 °C, h (2 measurements) (ISO 1167-1:2006) | 478/394 | 330/377 |
| STPR test at 5.7 MPa/80 °C, h (2 measurements) (ISO 1167-1:2006) | 6453/7559 | 227/298 |
| Notched pipe test at 4.6 MPa/80 °C, h (ISO 13479:1997) | 3776/3195 | 2249/2239 |

It is apparent from the above results that the inventive bimodal polyethylene composition in which the LMW component had a $MFR_5$ of only 54 g/10 min. and thus a substantially higher molecular weight compared with the comparative composition, showed a marked improvement in RCP resistance (reduced $T_{crit}$) and by far superior performance in pressure resistance (short term pressure resistance on unnotched pipes tested according to ISO 1167-1:2006) and slow crack growth resistance on notched pipes (ISO 13479:1997). Simultaneously, tensile modulus, impact strength and sagging resistance (viscosity at $eta_{747}$) was maintained at the same desirable level as in the comparative composition or was even improved. The inventive pipes by far exceeded the criteria for compliance with the desired PE100 standard. As evident from the above Table 3, the pipes withstood a circumferential hoop stress at 5.4 MPa and 80 °C for more than 165 h and a circumferential hoop stress at 12.4 MPa and 20 °C for more than 100 h, as reported in EN 1555-2:2002 (gas pipes) and in EN 12201-2:2003 (water pipes) and in accordance with the test method of EN 921:1994.

**Claims**

1. A polyethylene composition comprising a base resin which comprises

   (A) a first ethylene homo- or copolymer fraction, and
   (B) a second ethylene homo- or copolymer fraction,

   wherein fraction (A) has a lower molecular weight than fraction (B), the molecular weight being determined by Gel Permeation Chromatography (GPC) according to ISO 16014-4:2003 and ASTM D 6474:1999,
   fraction (A) has a $MFR_2$ of not more than 100 g/10 min., determined according to ISO 1133 at a loading of 2.16 kg and at 190 °C, and

the polyethylene compositions exhibit a viscosity at $eta_{747}$ of at least 400 kPa*s, determined at 190 °C and at conditions according to ISO 6721-10:1999.

2. The polyethylene composition according to claim 1, wherein the $MFR_5$ of the composition is 0.6 g/10min or below, determined according to ISO 1133 at a loading of 5.00 kg and at 190 °C.

3. The polyethylene composition according to claim 1 or 2, wherein the base resin has a density of 930-970 kg/m$^3$.

4. The polyethylene composition according to any one of claims 1 to 3, wherein the base resin has a comonomer content of not more than 1 mol%, based on the total weight of the polyethylene composition, the comonomer content being determined by quantitative nuclear-magnetic resonance (NMR) spectroscopy as described herein.

5. The polyethylene composition according to any one of the preceding claims, wherein fraction (A) is an ethylene homopolymer.

6. The polyethylene composition according to any of the preceding claims wherein fraction (B) is a copolymer of ethylene with at least one further alpha-olefin comonomer.

7. A polyethylene composition according to any of the preceding claims wherein the base resin has been produced in a multistage process.

8. A process for the production of a polyethylene composition according to any of the preceding claims comprising the steps of:

   i) polymerising in a first polymerization step ethylene monomers, and optionally one or more alpha-olefin comonomers, in the presence of a polymerisation catalyst to obtain a first ethylene homo- or copolymer fraction (A)
   ii) polymerising in a second polymerization step ethylene monomers, and optionally one or more alpha-olefin comonomers, in the presence of a polymerisation catalyst to obtain a second ethylene homo- or copolymer fraction (B) having a higher average molecular weight than fraction (A),

   wherein the first polymerisation step (i) and the second polymerisation step (ii) are conducted in any order.

9. The process according to claim 8, wherein the polymerisation to obtain fraction (A) is carried out in a slurry reactor.

10. The process according to claim 8 or 9, wherein the polymerisation to obtain fraction (B) is carried out in a gas phase reactor.

11. The process according to any one of claims 8 to 10, wherein the polymerization catalyst is a Ziegler-Natta catalyst.

12. An article comprising a polyethylene composition according to any one of claims 1 to 7.

13. An article according to claim 12 which is a pipe or a fitting.

14. Use of a polyethylene composition according to any one of claims 1 to 7 for the production of a pipe or a fitting.

15. Use of a polyethylene composition according to any one of claims 1 to 7 for increasing the lifetime of a pipe or a fitting.


**Patentansprüche**

1. Polyethylenzusammensetzung, umfassend ein Basisharz, das das Folgende umfasst:

   (A) eine erste Ethylenhomo- oder -copolymerfraktion, und
   (B) eine zweite Ethylenhomo- oder -copolymerfraktion,

   wobei die Fraktion (A) ein niedrigeres Molekulargewicht als die Fraktion (B) aufweist, wobei das Molekulargewicht mittels Gelpermeationschromato-graphie (GPC) gemäß ISO 16014-4:2003 und ASTM D 6474:1999 bestimmt wird, die Fraktion (A) einen $MFR_2$ von nicht mehr als 100 g/10 min aufweist, bestimmt gemäß ISO 1133 bei einer Last von 2,16 kg und 190 °C, und

die Polyethylenzusammensetzungen eine Viskosität bei $eta_{747}$ von mindestens 400 kPa*s aufweisen, bestimmt bei 190 °C und bei Bedingungen gemäß ISO 6721-10:1999.

2. Polyethylenzusammensetzung nach Anspruch 1, wobei der $MFR_5$ von der Zusammensetzung 0,6 g/10 min oder weniger beträgt, bestimmt gemäß ISO 1133 bei einer Last von 5,00 kg und 190 °C.

3. Polyethylenzusammensetzung nach Anspruch 1 oder 2, wobei das Basisharz eine Dichte von 930-970 kg/m$^3$ aufweist.

4. Polyethylenzusammensetzung nach einem der vorhergehenden Ansprüche 1 bis 3, wobei das Basisharz ein Comonomergehalt von nicht mehr als 1 Mol-% aufweist, basierend auf dem Gesamtgewicht der Polyethylenzusammensetzung, wobei der Comonomergehalt durch quantitative Kernspinresonanz (NMR)-Spektroskopie bestimmt wird, wie sie hier beschrieben ist.

5. Polyethylenzusammensetzung nach einem der vorhergehenden Ansprüche, wobei die Fraktion (A) ein Ethylenhomopolymer ist.

6. Polyethylenzusammensetzung nach einem der vorhergehenden Ansprüche, wobei die Fraktion (B) ein Copolymer aus Ethylen mit mindestens einem weiteren alpha-Olefincomonomer ist.

7. Polyethylenzusammensetzung nach einem der vorhergehenden Ansprüche, wobei das Basisharz in einem mehrstufigen Verfahren hergestellt worden ist.

8. Verfahren für die Herstellung von einer Polyethylenzusammensetzung nach einem der vorhergehenden Ansprüche, umfassend die folgenden Schritte:

i) Polymerisieren in einem ersten Polymerisationsschritt von Ethylenmonomeren und optional ein oder mehreren alpha-Olefincomonomeren in Gegenwart von einem Polymerisationskatalysator, um eine erste Ethylenhomo- oder -copolymerfraktion (A) zu erhalten
ii) Polymerisieren in einem zweiten Polymerisationsschritt von Ethylenmonomeren und optional ein oder mehreren alpha-Olefincomonomeren in Gegenwart von einem Polymerisationskatalysator, um eine zweite Ethylenhomo- oder -copolymerfraktion (B) zu erhalten, die ein höheres durchschnittliches Molekulargewicht als die Fraktion (A) aufweist,

wobei der erste Polymerisationsschritt (i) und der zweite Polymerisationsschritt (ii) in irgendeiner Reihenfolge durchgeführt werden.

9. Verfahren nach Anspruch 8, wobei die Polymerisation, um die Fraktion (A) zu erhalten, in einem Slurry-Reaktor durchgeführt wird.

10. Verfahren nach Anspruch 8 oder 9, wobei die Polymerisation, um die Fraktion (B) zu erhalten, in einem Gasphasenreaktor durchgeführt wird.

11. Verfahren nach einem der Ansprüche 8 bis 10, wobei der Polymerisationskatalysator ein Ziegler-Natta-Katalysator ist.

12. Artikel, umfassend eine Polyethylenzusammensetzung nach einem der Ansprüche 1 bis 7.

13. Artikel nach Anspruch 12, welcher ein Rohr oder ein Anschlussstück ist.

14. Verwendung von einer Polyethylenzusammensetzung nach einem der Ansprüche 1 bis 7 für die Herstellung von einem Rohr oder einem Anschlussstück.

15. Verwendung von einer Polyethylenzusammensetzung nach einem der Ansprüche 1 bis 7 zur Erhöhung der Lebensdauer von einem Rohr oder einem Anschlussstück.

**Revendications**

1. Composition de polyéthylène comprenant une résine de base qui comprend

   (A) une première fraction d'homopolymère ou de copolymère d'éthylène, et
   (B) une deuxième fraction d'homopolymère ou de copolymère d'éthylène,

   dans laquelle la fraction (A) a une masse moléculaire inférieure à celle de la fraction (B), la masse moléculaire étant déterminée par chromatographie d'exclusion diffusion (GPC) conformément aux normes ISO 16014-4:2003 et ASTM D 6474:1999,
   la fraction (A) a un $MFR_2$, déterminé conformément à la norme ISO 1133 sous une charge de 2,16 kg et à 190°C, ne dépassant pas 100 g/10 min, et
   la composition de polyéthylène présente une viscosité $\hat{e}ta_{747}$, déterminée à 190°C dans les conditions conformes à la norme ISO 6721-10:1999, d'au moins 400 kPa.s.

2. Composition de polyéthylène selon la revendication 1, dans laquelle le $MFR_5$ de la composition, déterminé conformément à la norme ISO 1133 sous une charge de 5,00 kg et à 190°C, est de 0,6 g/10 min ou moins.

3. Composition de polyéthylène selon la revendication 1 ou 2, dans laquelle la résine de base a une masse volumique de 930 à 970 kg/m$^3$.

4. Composition de polyéthylène selon l'une quelconque des revendications 1 à 3, dans laquelle la résine de base a une teneur en comonomères ne dépassant pas 1 % en moles par rapport au poids total de la composition de polyéthylène, la teneur en comonomères étant déterminée par spectroscopie par résonance magnétique nucléaire (RMN) quantitative telle que décrite ici.

5. Composition de polyéthylène selon l'une quelconque des revendications précédentes, dans laquelle la fraction (A) est un homopolymère d'éthylène.

6. Composition de polyéthylène selon l'une quelconque des revendications précédentes, dans laquelle la fraction (B) est un copolymère d'éthylène avec au moins un autre comonomère d'a-oléfine.

7. Composition de polyéthylène selon l'une quelconque des revendications précédentes, dans laquelle la résine de base a été produite par un procédé à étages multiples.

8. Procédé pour la production d'une composition de polyéthylène selon l'une quelconque des revendications précédentes, comprenant les étapes suivantes :

   i) polymérisation, dans une première étape de polymérisation, de monomères d'éthylène et éventuellement d'un ou plusieurs comonomères d' $\alpha$-oléfine, en présence d'un catalyseur de polymérisation, pour que soit obtenue une première fraction d'homopolymère ou de copolymère d'éthylène (A),
   ii) polymérisation, dans une deuxième étape de polymérisation, de monomères d'éthylène et éventuellement d'un ou plusieurs comonomères d' $\alpha$-oléfine, en présence d'un catalyseur de polymérisation, pour que soit obtenue une deuxième fraction d'homopolymère ou de copolymère d'éthylène (B) ayant une masse moléculaire supérieure à celle de la fraction (A),

   dans lequel la première étape de polymérisation (i) et la deuxième étape de polymérisation (ii) sont effectuées dans n'importe quel ordre.

9. Procédé selon la revendication 8, dans lequel la polymérisation pour que soit obtenue la fraction (A) est effectuée dans un réacteur en suspension.

10. Procédé selon la revendication 8 ou 9, dans lequel la polymérisation pour que soit obtenue la fraction (B) est effectuée dans un réacteur en phase gazeuse.

11. Procédé selon l'une quelconque des revendications 8 à 10, dans lequel le catalyseur de polymérisation est un catalyseur de Ziegler-Natta.

**12.** Article comprenant une composition de polyéthylène selon l'une quelconque des revendications 1 à 7.

**13.** Article selon la revendication 12, qui est un tuyau ou un raccord.

**14.** Utilisation d'une composition de polyéthylène selon l'une quelconque des revendications 1 à 7 pour la production d'un tuyau ou d'un raccord.

**15.** Utilisation d'une composition de polyéthylène selon l'une quelconque des revendications 1 à 7 pour augmenter la durée de vie d'un tuyau ou d'un raccord.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 0022040 A
- EP 1985660 A1
- EP 1655337 A1
- US 2010178443 A
- US 2003096901 A
- EP 1460105 A
- US 2007282067 A
- US 6185349 B
- US 6878784 B
- US 4582816 A
- US 3405109 A
- US 3324093 A
- EP 479186 A
- US 5391654 A
- WO 2004055068 A
- WO 2004055069 A
- EP 0810235 A
- US 5026795 A
- US 4803251 A
- US 4532311 A
- US 4855370 A
- EP 560035 A

### Non-patent literature cited in the description

- **SCHEIRS ; BOHM ; BOOT ; LEEVERS.** PE100 Resins for Pipe Applications. *TRIP,* 1996, vol. 4 (12), 408-415
- **KLIMKE, K. ; PARKINSON, M. ; PIEL, C. ; KAMINSKY, W. ; SPIESS, H.W. ; WILHELM, M.** *Macromol. Chem. Phys.,* 2006, vol. 207, 382
- **PARKINSON, M. ; KLIMKE, K. ; SPIESS, H.W. ; WILHELM, M.** *Macromol. Chem. Phys.,* 2007, vol. 208, 2128
- **CASTIGNOLLES, P. ; GRAF, R. ; PARKINSON, M. ; WILHELM, M. ; GABORIEAU, M.** *Polymer,* 2009, vol. 50, 2373
- **POLLARD, M. ; KLIMKE, K. ; GRAF, R. ; SPIESS, H.W. ; WILHELM, M. ; SPERBER, O. ; PIEL, C. ; KAMINSKY, W.** *Macromolecules,* 2004, vol. 37, 813
- **FILIP, X. ; TRIPON, C. ; FILIP, C.** *J. Mag. Resn.,* 2005, vol. 176, 239
- **GRIFFIN, J.M. ; TRIPON, C. ; SAMOSON, A. ; FILIP, C. ; BROWN, S.P.** *Mag. Res. in Chem.,* 2007, vol. 45, S1, , S198
- **J. RANDALL.** *Macromol. Sci., Rev. Macromol. Chem. Phys.,* 1989, vol. C29, 201
- Encyclopedia of Polymer Science and Engineering. vol. 14, 492-509